# FASCICULE DE BREVET EUROPEEN

(11) **EP 3 771 333 B1**
(45) Date de publication et mention de la délivrance du brevet: **10.04.2024**
(21) Numéro de dépôt: 20187138.1
(22) Date de dépôt: 22.07.2020
(51) Int. Cl.: A01K 5/00, A01F 25/20

(54) **MACHINE POUR LE MELANGE D'UN OU DE PRODUIT(S), PLUS PARTICULIEREMENT UN OU DES PRODUITS SERVANT A L'ALIMENTATION DES ANIMAUX, ET LA DISTRIBUTION DU MELANGE DU OU DESDITS PRODUIT(S)**
MASCHINE ZUM MISCHEN VON EINEM ODER MEHREREN PRODUKTEN, INSBESONDERE EINEM ODER MEHREREN PRODUKTEN, DIE DER ERNÄHRUNG VON TIEREN DIENEN, SOWIE VERTEILUNG DIESER MISCHUNG AUS EINEM ODER MEHREREN SOLCHEN PRODUKTEN
MACHINE FOR MIXING A PRODUCT OR PRODUCTS, PARTICULARLY A PRODUCT OR PRODUCTS FOR FEEDING ANIMALS, AND THE DISTRIBUTION OF THE MIXTURE OF SAID PRODUCT OR PRODUCTS

(30) Priorité: 31.07.2019 FR 1908756
(43) Date de publication de la demande: 03.02.2021
(73) Titulaire: Kuhn-Audureau SAS, 85260 La Copechagnière (FR)
(72) Inventeur: GUIDAULT, Léandre, 85000 La Roche sur Yon (FR)
(74) Mandataire: Cabinet Nuss

(56) Documents cités:
- EP-A1- 0 706 755
- EP-A1- 1 084 612
- WO-A1-03/103821
- US-A- 5 645 345

## Description

La présente invention concerne le domaine de la distribution de produits et notamment de la distribution alimentaire pour les animaux, plus particulièrement pour le bétail et a pour objet une machine pour le mélange d'un ou de produit(s), plus particulièrement un ou des produits servant à l'alimentation des animaux, et la distribution du mélange du ou desdits produit(s).

Les machines destinées au mélange et à la distribution des aliments pour les animaux, plus particulièrement pour le bétail, sont déjà connues et comprennent généralement une cuve montée sur un châssis roulant destiné à être tracté par un véhicule ou étant autonome, et un mélangeur tel qu'au moins une vis de mélange rotative d'axe généralement vertical. La cuve comprend un fond ou plancher surmonté d'une paroi latérale définissant un espace intérieur de réception contenant la ou les vis de mélange et recevant le ou les produits destiné(s) à être mélangé(s) par la vis en vue de leur distribution à l'extérieur de la cuve.

Une telle machine comprend en outre une ou plusieurs trappe(s) située(s) dans la paroi latérale de la cuve à l'avant et/ou à l'arrière de cette dernière. Chaque trappe comporte une ouverture permettant l'évacuation du mélange à travers la paroi latérale et étant fermée par un volet. En outre, la ou chaque trappe est généralement associée à une goulotte de distribution. L'avant et l'arrière de la cuve étant définis dans la présente demande par rapport au sens d'avancement de la machine.

La cuve, plus particulièrement le plancher de la cuve, est généralement de forme ovale ou oblongue avec deux extrémités arrondies et adaptées aux vis de mélange rotatives d'axe verticale.

La ou les vis de mélange ont pour fonction de mélanger le produit ou les différents produits alimentaires déversés ou amenés dans la cuve et de rendre le mélange le plus homogène possible.

L'ouverture de la trappe, dont le bord inférieur est situé sensiblement au niveau du bord du plancher de la cuve, permet l'éjection du mélange hors de la cuve sous l'effet de la rotation de la ou des vis de mélange. En outre, l'ouverture est généralement placée au niveau de l'une des extrémités arrondies, c'est-à-dire que le bord inférieur de l'ouverture est situé au moins en partie au niveau de la partie arrondie du bord du plancher.

La goulotte de distribution a pour fonction de guider ou de canaliser le mélange éjecté au travers de l'ouverture et comporte à cet effet un fond et des parois latérales. Le fond de la goulotte est plus ou moins incliné vers le bas depuis le bord inférieur de l'ouverture, ce qui a pour effet de former en sortie de l'ouverture une rampe d'évacuation du mélange qui glisse sur cette dernière sous l'effet de la gravité et de la force d'éjection et est éjecté de ladite rampe en un point éloigné de l'ouverture. Le fond présente à cet effet une longueur, c'est-à-dire une étendue au-delà de l'ouverture vers l'extérieur, qui est déterminée de manière à pouvoir éjecter le mélange suffisamment loin de la cuve et du passage des roues afin que la distribution soit efficace et que ces dernières n'écrasent pas le mélange lors de l'avancée du véhicule. En outre, l'inclinaison du fond est relativement faible afin de préserver une garde au sol du fond de la goulotte suffisamment élevée pour que celui-ci ne vienne pas au contact d'un obstacle ou de la surface de réception du mélange ainsi distribué.

Toutefois, en position de fermeture du volet, du fait de la longueur du fond de la goulotte et/ou de la faible inclinaison de la pente, du mélange s'accumule sur ledit fond et est retenu sur celui-ci dans la goulotte à la fin de la distribution. Cette accumulation du mélange sur ledit fond qui forme ainsi une surface externe de rétention du mélange, généralement au niveau de l'un des coins de l'ouverture, se disperse sur le sol lors du déplacement de la machine et/ou empêche le volet de la trappe de se fermer totalement.

Le document EP0706755A1 a pour objet une mélangeuse comprenant une chambre de mélange comportant un fond/plancher et une paroi latérale, une ouverture et une goulotte de décharge. L'ouverture est située sur le côté arrière de la mélangeuse et est pourvue d'un volet permettant, à l'état fermé, de fermer l'ouverture. La goulotte est mobile en pivotement autour d'un axe pivot sensiblement vertical dans une position d'évacuation déployée de manière que le mélange puisse être délivré à la fois directement derrière et de chaque côté de la mélangeuse.

Le document EP1084612A1 concerne un wagon coupeur-mélangeur pour ensilage comprenant une vis mélangeuse-coupeuse, une cuve supportée par un socle reposant sur des roues. La cuve est pourvue sur sa face latérale d'une bouche de déchargement fermée par une porte pouvant être soulevée verticalement. Il comprend en outre une bande transporteuse et un châssis mobile portant ce dernier. Le châssis, dans un double mouvement de déplacement, coulisse et est incliné en fin de course par un mouvement de pivotement autour d'un axe horizontal de sorte à être mis dans une position déployée depuis une position rétractée sous la cuve.

Le document US5645345A a pour objet un appareil pour mélanger et répartir des matières fibreuses comprenant un compartiment de mélange comportant un plancher et un rotor de mélange, un compartiment de distribution s'étendant latéralement vers l'extérieur depuis une ouverture de communication pratiquée dans la paroi latérale du compartiment de mélange. Le compartiment de distribution comprend une vis de distribution, une sortie de distribution fermée par une porte et une goulotte reliée à cette dernière et étant articulée autour d'un pivot horizontal s'étendant à l'extrémité inférieure de la sortie de distribution et au niveau du fond du compartiment de distribution.

Toutefois, les machines divulguées par ces trois documents présentent un encombrement important et/ou ne permettent pas de limiter ou limiter suffisamment, voire de supprimer la surface externe de rétention du mélange pouvant s'accumuler en fin de distribution sur le fond de la goulotte.

La présente invention a pour but de pallier ces inconvénients en proposant une machine pour le mélange d'un ou de produit(s), plus particulièrement un ou des produits servant à l'alimentation des animaux, et la distribution du mélange du ou desdits produit(s), permettant de limiter ou limiter suffisamment, voire de supprimer la surface externe de rétention du mélange pouvant s'accumuler en fin de distribution sur le fond de la goulotte, tout en réduisant l'encombrement de la machine.

A cet effet, la machine, selon la présente invention définie par la revendication 1, pour le mélange d'un ou de produit(s), plus particulièrement un ou des produits servant à l'alimentation des animaux, et la distribution du mélange du ou desdits produit(s), ladite machine comprenant une cuve portée par un châssis roulant et comportant un plancher et au moins une paroi latérale surmontant ledit plancher en délimitant avec ce dernier un espace interne de réception et de mélange, un dispositif mélangeur monté dans ledit espace de réception pour réaliser le mélange, au moins une trappe située dans la paroi latérale et comprenant une ouverture à travers laquelle le mélange peut être éjecté hors de la cuve et au moins un volet apte et destiné à être commandé en déplacement entre une position d'ouverture et une position de fermeture de l'ouverture, au moins une goulotte associée à la ou à chaque trappe et comprenant un fond formant une rampe se terminant par un bord d'éjection permettant, lors de la distribution, l'éjection et la distribution du mélange en un point éloigné de l'ouverture, un système de déplacement comprenant une articulation, un axe de pivotement de l'articulation, un mécanisme d'actionnement et d'entraînement permettant l'actionnement et l'entraînement du déplacement du fond de la goulotte autour dudit axe de pivotement et des moyens de guidage dudit déplacement du fond, ladite articulation étant une articulation pivot d'axe de pivotement sensiblement vertical, se caractérise essentiellement en ce que le fond de la goulotte est rendu mobile grâce audit système de déplacement entre une position rétractée, à l'état de fermeture du volet, de préférence au moins en partie sous la cuve et plus particulièrement sous le plancher de cette dernière, et une position déployée de distribution, à l'état d'ouverture du volet.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1] montre une vue de profil d'une machine selon la présente invention comprenant une trappe et une goulotte associée à cette dernière situées dans la partie avant gauche de la cuve,
[Fig. 2] montre une vue de dessus de la machine représentée sur la figure 1, sans la représentation de la partie avant du châssis permettant son attelage à un véhicule tracteur, et montrant trois autres positions possibles, représentées en traits interrompus, de la trappe et de la goulotte associée à cette dernière, selon la présente invention, dans la paroi latérale de la cuve, à savoir une position possible située dans la partie avant droite, une position possible située dans la partie arrière gauche et une position possible située dans la partie arrière droite de la cuve,
[Fig. 3] montre une vue en perspective de la partie arrière gauche de la machine comportant la trappe et la goulotte associée à cette dernière représentées en traits interrompus sur la figure 2, à l'état de fermeture de la trappe et dans la position rétractée du fond de la goulotte,
[Fig. 4] montre la machine représentée sur la figure 3 mais à l'état de d'ouverture de la trappe et dans la position déployée de distribution de la goulotte,
[Fig. 5] montre une vue de dessous et en perspective de la machine représentée sur la figure 3,
[Fig. 6] montre une vue de dessous et en perspective de la machine représentée sur la figure 4,
[Fig. 7] montre une vue en perspective de trois quart du fond de la goulotte et de son articulation autour de l'axe de pivotement.

Les figures montrent une machine, selon la présente invention, pour le mélange d'un ou de produit(s), plus particulièrement un ou des produits servant à l'alimentation des animaux, et la distribution du mélange du ou desdits produit(s), ladite machine comprenant :
- une cuve 1 portée par un châssis 2 roulant, ladite cuve 1 comportant un plancher 1a et au moins une paroi latérale 1b surmontant ledit plancher 1a en délimitant avec ce dernier un espace interne de réception et de mélange 1c,
- un dispositif mélangeur 3 monté dans ledit espace de réception pour réaliser le mélange,
- au moins une trappe 4 située dans la paroi latérale 1b et comprenant une ouverture 4a à travers laquelle le mélange peut être éjecté hors de la cuve 1 et au moins un volet 4b apte et destiné à être commandé en déplacement entre une position d'ouverture et une position de fermeture de l'ouverture 4a, et
- au moins une goulotte 5 associée à la ou à chaque trappe 4 et comprenant un fond 5a formant une rampe se terminant par un bord d'éjection 50a permettant, lors de la distribution, l'éjection et la distribution du mélange en un point éloigné de l'ouverture 4a.

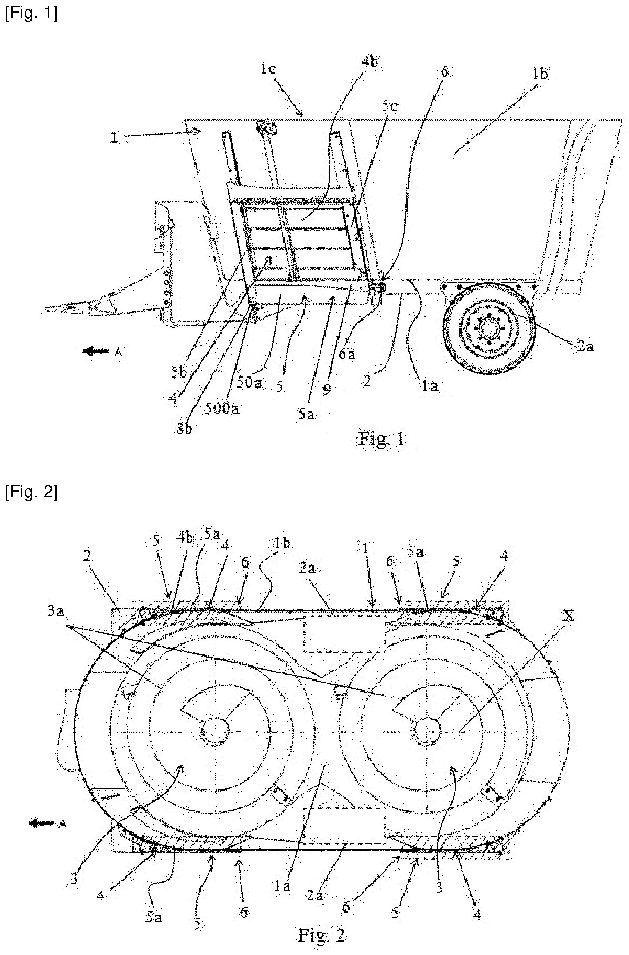

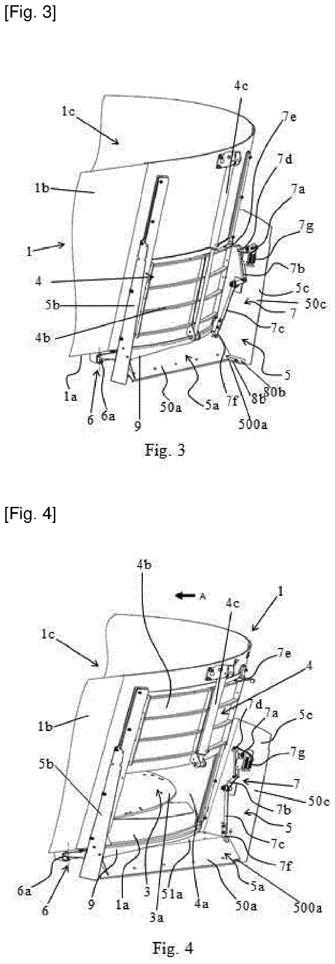

Le dispositif mélangeur 3, comme on peut le voir sur les figures 2 et 4, peut comprendre au moins une vis de mélange 3a rotative, de préférence, comme c'est le cas généralement, d'axe vertical. Le dispositif mélangeur 3 peut comprendre une, deux, voire trois vis de mélange 3a.

On comprendra que l'ensemble trappe 4 et goulotte 5 associée à cette dernière peut être situé à différents endroits de la cuve 1, par exemple, comme on peut le voir sur la figure 1, et en prenant une orientation dans le sens d'avancement A (représenté par une flèche sur la figure 1) de la machine, dans la partie avant gauche de la cuve 1 ou, comme on peut le voir en traits interrompus sur la figure 2, dans la partie avant droite ou dans la partie arrière gauche (voir également notamment les figures 3 et 4) ou dans la partie arrière droite de la cuve 1. D'autres endroits, non représentés sur les figures annexées, tels que dans la partie centrale de la cuve 1, à gauche ou à droite de cette dernière, peuvent également recevoir au moins un tel ensemble trappe 4 et goulotte 5 associée à cette dernière. On comprendra également que, dans une forme de réalisation particulière, la machine selon la présente invention, peut comprendre plusieurs ensembles trappe 4 et goulotte 5 associée à cette dernière, selon l'invention, qui peuvent être positionnés, de préférence, aux endroits précités.

Conformément à la présente invention une telle machine comprend en outre un système de déplacement 6, 7, 8a, 8b et le fond 5a de la goulotte 5 est rendu mobile grâce audit système de déplacement 6, 7, 8a, 8b entre une position rétractée, à l'état de fermeture du volet 4b, de préférence au moins en partie sous la cuve 1 et plus particulièrement sous le plancher 1a de cette dernière, et une position déployée de distribution, à l'état d'ouverture du volet 4b.

Le châssis 2 roulant peut comprendre des roues 2a, par exemple deux roues 2a situées de chaque côté de l'axe longitudinal X du châssis (voir notamment la figure 2). Les roues 2a peuvent être situées, de préférence, sensiblement dans la partie centrale du châssis 2 ou sensiblement en retrait de cette dernière ou dans la partie arrière du châssis 2 (figures 1 et 2). Les roues 2 peuvent être également situées dans la partie avant du châssis. La présente invention peut prévoir que la goulotte 5, notamment le bord d'éjection 50a du fond 5a de cette dernière, soit configuré(e), ou que les roues 2a soit positionnées par rapport à cette dernière, pour que l'éjection du mélange sortant de la goulotte 5 soit réalisé en un point éloigné du passage des roues 2a.

Le système de déplacement 6, 7, 8a, 8b comprend:
- une articulation 6, un axe de pivotement 6a de l'articulation 6 et
- un mécanisme d'actionnement et d'entraînement 7 permettant l'actionnement et l'entraînement du déplacement du fond 5a de la goulotte 5 autour dudit axe de pivotement 6a,
- et des moyens de guidage 8a, 8b dudit déplacement du fond 5a.

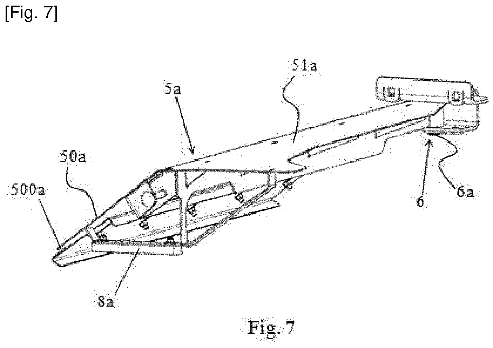

Si on se réfère plus particulièrement aux figures 1, 3, 4, 5, 6 et 7 on peut voir que l'articulation 6 peut être située sous le plancher 1a de la cuve 1 et, de préférence, à proximité de l'ouverture 4a. En outre, l'articulation 6 peut être décalée latéralement par rapport à l'ouverture 4a comme on peut le voir sur lesdites figures.

De préférence, l'articulation 6 peut être décalée latéralement vers la partie centrale de la cuve 1, c'est-à-dire que l'articulation 6, selon que l'ensemble trappe 4 et goulotte 5 associée à cette dernière est situé dans la partie avant ou la partie arrière de la cuve 1, peut être décalée latéralement respectivement vers la partie arrière ou vers la partie avant de la cuve 1 (voir notamment les figures 1 et 2).

L'articulation 6 peut être fixée sur la cuve 1 (voir notamment les figures 3 et 4) et/ou sur le châssis 2.

Comme on peut le voir notamment sur les figures 1, 3, 4, 5, 6 et 7, l'articulation 6 est une articulation pivot d'axe de pivotement 6a sensiblement vertical.

L'articulation 6 et le déplacement du fond 5a de la goulotte 5 permet à ce dernier de se rétracter sous la cuve 1 et notamment sous le plancher 1a de cette dernière et ainsi de limiter, voire de supprimer la surface de rétention éventuelle à l'extérieur de la cuve en position fermée du volet 4b, contrairement aux machines actuelles qui comporte un fond de goulotte fixe qui demeure en position de déployée de distribution ou d'utilisation en position de fermeture du volet de la trappe. En outre la rentrée ou rétractation du fond 5a selon la présente invention permet de limiter la largeur et/ou l'encombrement de la machine dans sa largeur en position de fermeture du volet 4b.

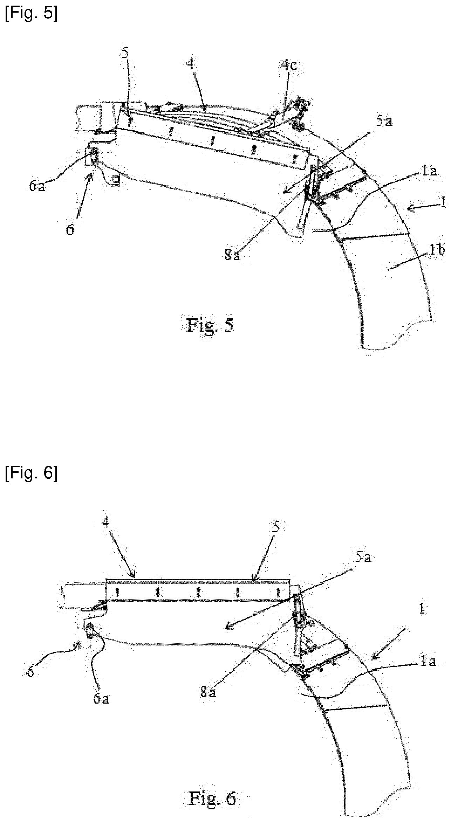

Le volet 4b peut être actionné au moyen d'un actionneur tel qu'un vérin hydraulique 4c, tel que visible sur la figure 5.

Comme on peut le voir notamment sur les figures 1, 3, 4, 5, 6 et 7, la goulotte 5 peut comprendre des parois latérales 5b, 5c délimitant avec le fond 5a de ladite goulotte 5 l'espace interne de cette dernière.

Si on se réfère à nouveau aux figures 1, 3, 4, 5, 6 et 7, on peut voir que, dans une forme de réalisation préférentielle, les moyens de guidage 8a, 8b peuvent comprendre un patin de guidage 8a solidaire du fond 5a et un support de guidage 8b solidaire d'une surface fixe 50c de la goulotte 5 et sur lequel support de guidage 8b peut venir s'appuyer ou reposer ledit patin de guidage 8a qui est apte à se déplacer, de préférence par glissement, sur ou le long de ce dernier, lors du déplacement du fond 5a de la goulotte 5. Le support de guidage 8b peut être disposé ou fixé, par exemple, sur la face interne 50c, formant ladite surface fixe, de l'une des parois latérales 5c. Lesdits moyens de guidage 8a, 8b formant alors une liaison de guidage et d'appui avec le fond 5a pour permettre et/ou renforcer son guidage en déplacement, le cas échéant en pivotement autour de l'axe de pivotement 6a. Un tel support de guidage 8b peut être réalisé à partir d'un profilé ou rail de guidage qui peut comporter une face d'appui et de glissement 80b sur laquelle peut venir s'appuyer et se déplacer, de préférence par glissement, le patin de guidage 8a. En outre une encoche 500a peut être pratiquée dans le bord du fond 5a pour recevoir ou être traversé par ledit support de guidage 8b de sorte à permettre au fond 5a de la goulotte 5 de pouvoir se rétracter ou se déployer au-dessus dudit support de guidage 8b. Le patin de guidage 8a et le support de guidage 8b peuvent chacun présenter une forme droite (figures 3, 5 et 6) ou courbe.

Dans une première forme de réalisation, représentée sur les figures annexées, le mécanisme d'actionnement et d'entraînement 7 peut être configuré pour asservir le déplacement du fond 5a de la goulotte 5 à celui du volet 4b de sorte que le déplacement du volet 4b dans sa position de fermeture commande automatiquement le déplacement du fond 5a de la goulotte 5 dans sa position rétractée (figures 1 et 3) et que le déplacement du volet de fermeture 4 dans sa position d'ouverture commande automatiquement le déplacement du fond 5a de la goulotte 5 dans sa position déployée de distribution (figure 4).

Si on se réfère maintenant particulièrement aux figures 3 et 4, on peut voir que le mécanisme d'actionnement et d'entraînement 7 peut comprendre des moyens de maintien 7g permettant de maintenir, en position d'ouverture du volet, le fond 5a de la goulotte 5 en position déployée (figure 4) et peut être configuré de sorte que le déplacement du volet 4b dans sa position de fermeture commande automatiquement l'actionnement du déplacement du fond 5a depuis sa position déployée de distribution jusqu'à sa position rétractée (figure 3) et que le déplacement du volet 4b dans sa positon d'ouverture commande automatiquement l'actionnement du déplacement du fond 5a depuis sa position rétractée jusqu'à sa position déployée de distribution dans laquelle il est maintenu grâce auxdits moyens de maintien 7g (figure 4).

Toujours dans la première forme de réalisation permettant l'asservissement, comme on peut le voir plus particulièrement sur les figures 3 et 4, le mécanisme d'actionnement et d'entraînement 7 peut comprendre un jeu d'au moins une bielle 7a, 7b, 7c, relié au fond 5a de la goulotte 5 et à une surface fixe 5b de la goulotte 5, un moyen d'actionnement 7d, 7e permettant l'actionnement dudit jeu d'au moins une bielle 7a, 7b, 7c par contact mécanique entre le volet 4b et ledit jeu d'au moins une bielle 7a, 7b, 7c lors du déplacement du volet 4b et un moyen de liaison 7f assurant la liaison entre ce dernier et le fond 5a de la goulotte 5 de sorte que l'actionnement dudit jeu d'au moins une bielle 7a, 7b, 7c entraîne le déplacement du fond 5a.

Si on se réfère plus particulièrement aux figures 3 et 4, on peut voir également que le moyen d'actionnement 7d, 7e peut comprendre un doigt d'actionnement 7d fixé sur le jeu d'au moins une bielle 7a et une patte d'actionnement 7e peut être fixée sur le volet 4b de sorte à pouvoir venir au contact dudit doigt d'actionnement 7a lors du déplacement du volet 4b vers sa position de fermeture pour réaliser le contact mécanique permettant l'actionnement dudit jeu d'au moins une bielle 7a, 7b, 7c.

Les moyens de maintien 7g peuvent consister en un moyen de rappel, tel qu'un ressort de rappel, apte à exercer une force de rappel sur le jeu d'au moins une bielle 7a, 7b, 7c et donc sur le fond 5a de la goulotte 5 vers sa position déployée en le maintenant dans cette dernière lors du déplacement du volet 4b dans sa position d'ouverture. On comprendra que de tels moyens de maintien 7g peuvent donc former un moyen d'actionnement permettant d'actionner, par exemple par la force de rappel, le jeu d'au moins une bielle 7a, 7b, 7c en ayant pour effet de déplacer le fond 5a de la goulotte 5 depuis sa position rétractée jusqu'à sa position déployée dans laquelle il est maintenu grâce audit moyen de maintien 7g.

Dans une deuxième forme de réalisation, non représentée sur les figures annexées, du système de déplacement du fond 5a de la goulotte 5, ledit système de déplacement peut être indépendant du volet 4b de la trappe 4 et peut alors constituer le propre système de déplacement dudit fond 5a. Par exemple, un tel système de déplacement peut comprendre un vérin hydraulique apte à actionner le déplacement dudit fond 5a lors de sa rétractation ou de son déploiement. Le déplacement du fond 5a peut être effectué autour de de l'axe de pivotement 6a de l'articulation 6 lorsque celle-ci est une articulation pivot. Le vérin hydraulique peut être monté d'une part sur le plancher 1a de la cuve ou de la machine et d'autre part peut être fixé sur le fond 5a de la goulotte 5.

Le fond 5a de la goulotte 5 peut comprendre deux pans 50a, 51a inclinés l'un par rapport à l'autre et contigus, à savoir un pan 51a arrière parallèle au plancher 1a de la cuve 1 et un pan 50a avant incliné vers le bas par rapport au pan 51a arrière, ledit pan 50a avant se terminant par ou formant le bord d'éjection.

Comme on peut le voir également sur les figures 1, 3 et 4, la machine peut comprendre en outre un moyen de raclage 9 qui s'étend au-dessus du fond 5a de la goulotte 5 à proximité immédiate ou en contact avec ledit fond 5a de sorte à permettre le raclage du mélange restant sur ledit fond 5a lors du déplacement de ce dernier depuis sa position déployée de distribution vers sa position rétractée. D'une manière avantageuse, le moyen de raclage 9 va nettoyer le pan 51a arrière, sensiblement horizontal, lorsque le fond 5a de la goulotte 5 se déplace vers sa position rétractée. L'inclinaison du pan 50a est déterminée de telle sorte que le mélange puisse glisser naturellement vers le sol lors de la distribution.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention définie par les revendications annexées.

## Revendications

1. Machine pour le mélange d'un ou de produit(s), plus particulièrement un ou des produits servant à l'alimentation des animaux, et la distribution du mélange du ou desdits produit(s), ladite machine comprenant une cuve (1) portée par un châssis (2) roulant et comportant un plancher (1a) et au moins une paroi latérale (1b) surmontant ledit plancher (1a) en délimitant avec ce dernier un espace interne de réception et de mélange (1c), un dispositif mélangeur (3) monté dans ledit espace de réception pour réaliser le mélange, au moins une trappe (4) située dans la paroi latérale (1b) et comprenant une ouverture (4a) à travers laquelle le mélange peut être éjecté hors de la cuve (1) et au moins un volet (4b) apte et destiné à être commandé en déplacement entre une position d'ouverture et une position de fermeture de l'ouverture (4a), au moins une goulotte (5) associée à la ou à chaque trappe (4) et comprenant un fond (5a) formant une rampe se terminant par un bord d'éjection (50a) permettant, lors de la distribution, l'éjection et la distribution du mélange en un point éloigné de l'ouverture (4a), un système de déplacement (6, 7, 8a, 8b) comprenant une articulation (6), un axe de pivotement (6a) de l'articulation (6), un mécanisme d'actionnement et d'entraînement (7) permettant l'actionnement et l'entraînement du déplacement du fond (5a) de la goulotte (5) autour dudit axe de pivotement (6a) et des moyens de guidage (8a, 8b) dudit déplacement du fond (5a), ladite articulation (6) étant une articulation pivot d'axe de pivotement (6a) sensiblement vertical, ladite machine étant **caractérisée en ce que** le fond (5a) de la goulotte (5) est rendu mobile grâce audit système de déplacement (6, 7, 8a, 8b) entre une position rétractée, à l'état de fermeture du volet (4b), de préférence au moins en partie sous la cuve (1) et plus particulièrement sous le plancher (1a) de cette dernière, et une position déployée de distribution, à l'état d'ouverture du volet (4b).

2. Machine, selon la revendication 1, **caractérisée en ce que** l'articulation (6) s'étend sous le plancher (1a) de la cuve (1) et à proximité de l'ouverture (4a).

3. Machine, selon l'une quelconque des revendications 1 à 2, **caractérisée en ce que** l'articulation (6) est décalée latéralement par rapport à l'ouverture (4a).

4. Machine, selon l'une quelconque des revendications 1 à 3, **caractérisée en ce que** la goulotte (5) comprend des parois latérales (5b, 5c) délimitant avec le fond (5a) de ladite goulotte (5) l'espace interne de cette dernière et **en ce que** les moyens de guidage (8a, 8b) comprennent un guide disposé sur la face interne (50c) de l'une des parois latérales (5c), ledit guide formant une liaison avec le fond (5a) pour permettre son guidage en pivotement autour de l'axe de pivotement (6a).

5. Machine, selon l'une quelconque des revendications 1 à 4, **caractérisée en ce que** le mécanisme d'actionnement et d'entraînement (7) est configuré pour asservir le déplacement du fond (5a) de la goulotte (5) à celui du volet (4b) de sorte que le déplacement du volet de fermeture (4) dans sa position de fermeture commande automatiquement le déplacement du fond (5a) de la goulotte (5) dans sa position rétractée et que le déplacement du volet de fermeture (4) dans sa position d'ouverture commande automatiquement le déplacement du fond (5a) de la goulotte (5) dans sa position déployée de distribution.

6. Machine, selon la revendication 5, **caractérisée en ce que** le mécanisme d'actionnement et d'entraînement (7) comprend des moyens de maintien (7g) permettant de maintenir, en position d'ouverture du volet (4b), le fond (5a) de la goulotte (5) en position déployée et est configuré de sorte que le déplacement du volet (4b) dans sa position de fermeture commande automatiquement l'actionnement du déplacement du fond (5a) depuis sa position déployée de distribution jusqu'à sa position rétractée et que le déplacement du volet (4b) dans sa positon d'ouverture commande automatiquement l'actionnement du déplacement du fond (5a) depuis sa position rétractée jusqu'à sa position déployée de distribution dans laquelle il est maintenu grâce auxdits moyens de maintien (7g).

7. Machine, selon la revendication 6, **caractérisée en ce que** le mécanisme d'actionnement et d'entraînement (7) comprend un jeu d'au moins une bielle (7a, 7b, 7c) reliée au fond (5a) de la goulotte (5) et à une surface fixe (5b) de la goulotte (5), un moyen d'actionnement (7d, 7e) permettant l'actionnement dudit jeu d'au moins une bielle (7a, 7b, 7c) par contact mécanique entre le volet (4b) et ledit jeu d'au moins une bielle (7a, 7b, 7c) lors du déplacement du volet (4b) et un moyen de liaison (7f) assurant la liaison entre ce dernier et le fond (5a) de la goulotte (5) de sorte que l'actionnement dudit jeu d'au moins une bielle (7a, 7b, 7c) entraîne le déplacement du fond (5a).

8. Machine, selon la revendication 7, **caractérisée en ce que** le moyen d'actionnement (7d, 7e) comprend un doigt d'actionnement (7d) fixé sur le jeu d'au moins une bielle (7a) et une patte d'actionnement (7e) fixée sur le volet (4b) de sorte à venir au contact dudit doigt d'actionnement (7d) lors du déplacement du volet (4b) vers sa position de fermeture pour réaliser le contact mécanique permettant l'actionnement dudit jeu d'au moins une bielle (7a, 7b, 7c).

9. Machine, selon l'une quelconque des revendications 6 à 8, **caractérisée en ce que** les moyens de maintien (7g) consistent en un moyen de rappel (7g), tel qu'un ressort de rappel, apte à exercer une force de rappel sur le jeu d'au moins une bielle (7a, 7b, 7c) et donc sur le fond (5a) de la goulotte (5) vers sa position déployée en le maintenant dans cette dernière en position d'ouverture du volet (4b).

10. Machine, selon l'une quelconque des revendications 1 à 4, **caractérisée en ce que** le système de déplacement du fond (5a) de la goulotte (5) est indépendant du volet (4b) de la trappe (4) et constitue le système de déplacement propre dudit fond (5a).

11. Machine, selon la revendication 10 **caractérisée en ce que** le système de déplacement du fond (5a) de la goulotte (5) comprend au moins un actionneur tel qu'un vérin hydraulique apte à actionner le déplacement dudit fond (5a) lors de sa rétractation ou de son déploiement, le cas échéant autour de l'axe de pivotement (6a).

12. Machine, selon l'une quelconque des revendications 1 à 11, **caractérisée en ce que** le fond (5a) de la goulotte (5) comprend deux pans (50a, 51a) inclinés l'un par rapport à l'autre et contigus, à savoir un pan (51a) arrière parallèle au plancher (1a) de la cuve (1) et un pan (50a) avant incliné vers le bas par rapport au pan (51a) arrière, ledit pan (50a) avant se terminant par ou formant le bord d'éjection (50a).

13. Machine, selon l'une quelconque des revendications 1 à 12, **caractérisée en ce que** les moyens de guidage (8a, 8b) comprennent un patin de guidage (8a) solidaire du fond (5a) de la goulotte (5) et un support de guidage (8b) solidaire d'une surface fixe de la goulotte (5) et sur lequel support de guidage (8b) vient s'appuyer ou reposer ledit patin de guidage (8a) qui est apte à se déplacer, de préférence par glissement, sur ou le long de ce dernier, lors du déplacement du fond (5a) de la goulotte (5).

14. Machine, selon l'une quelconque des revendications 1 à 13, **caractérisée en ce qu'**elle comprend en outre un moyen de raclage (9) qui s'étend au-dessus du fond (5a) de la goulotte (5) à proximité immédiate ou en contact avec ledit fond (5a) de sorte à permettre le raclage du mélange restant sur ledit fond (5a) lors du déplacement de ce dernier depuis sa position déployée de distribution vers sa position rétractée.

## Patentansprüche

1. Maschine zur Mischung von einem oder mehreren Produkten, insbesondere einem oder mehreren Produkten für die Tierfütterung, und zur Verteilung der Mischung des oder der Produkte, wobei die Maschine folgendes umfasst: einen Tank (1), der von einem Fahrgestell (2) getragen wird und einen Boden (1a) und mindestens eine Seitenwand (1b) aufweist, die sich über dem Boden (1a) erstreckt und mit letzterem einen Innenraum (1c) zur Aufnahme und zum Mischen von Produkten abgrenzt, eine Mischvorrichtung (3), die in dem Aufnahmeraum zur Herstellung der Mischung angebracht ist, mindestens eine in der Seitenwand (1b) gelegene Falltür (4) mit einer Öffnung (4a), durch welche die Mischung aus dem Tank (1) ausgeworfen werden kann und mindestens einer Klappe (4b), die dazu geignet und bestimmt ist, in Verschiebung zwischen einer Öffnungsstellung und einer Schliessstellung der Öffnung (4a) gesteuert zu werden, mindestens eine Rutsche (5), die mit der oder jeder Falltür (4) verbunden ist und einen Boden (5a) aufweist, der eine Rampe bildet, die in einer Auswurfkante (50a) endet, die bei der Verteilung, den Auswurf und die Verteilung der Mischung an einem von der Öffnung (4a) entfernten Punkt gestattet, ein Verschiebungssystem (6, 7, 8a, 8b) mit einem Gelenk (6), einer Schwenkachse (6a) für das Gelenk (6), einem Betätigungs- und Antriebsmechanismus (7), der die Betätigung und den Antrieb der Verschiebung des Bodens (5a) der Rutsche (5) um die Schwenkachse (6a) gestattet und Führungsmitteln (8a, 8b) für die Verschiebung des Bodens (5a), wobei das Gelenk (6) ein Drehgelenk mit einer im wesentlichen vertikalen Schwenkachse (6a) ist, wobei die Maschine **dadurch gekennzeichnet ist, dass** der Boden (5a) der Rutsche (5) dank des Verschiebungssystems (6, 7, 8a, 8b) zwischen einer eingezogenen Stellung beim Schliessungszustand der Klappe (4b), vorzugsweise mindestens teilweise unter dem Tank (1) und insbesondere unter dem Boden (1a) letzterem, und einer ausgefahrenen Verteilungsstellung beim Öffnungszustand der Klappe (4b), beweglich gemacht wird.

2. Maschine nach Anspruch 1, **dadurch gekennzeichnet, dass** sich das Gelenk (6) unter dem Boden (1a) des Tanks (1) und in der Nähe der Öffnung (4a) erstreckt.

3. Maschine nach irgend einem der Ansprüche 1 bis 2, **dadurch gekennzeichnet, dass** das Gelenk (6) zu der Öffnung (4a) seitlich versetzt ist.

4. Maschine nach irgend einem der Ansprüche 1 bis 3, **dadurch gekennzeichnet, dass** die Rutsche (5) Seitenwände (5b, 5c) umfasst, die zusammen mit dem Boden (5a) der Rutsche (5), den Innenraum letzterer abgrenzen und, dass die Führungsmittel (8a, 8b) eine Führung umfassen, die an der Innenseite (50c) einer der Seitenwänden (5c) angeordnet ist, wobei die Führung eine Verbindung mit dem Boden (5a) bildet, um seine Schwenkführung um die Schwenkachse (6a) zu gestatten.

5. Maschine nach irgend einem der Ansprüche 1 bis 4, **dadurch gekennzeichnet, dass** der Betätigungs- und Antriebsmechanismus (7) konfiguriert ist, um die Verschiebung des Bodens (5a) der Rutsche (5) mit der Verschiebung der Klappe (4b) zu unterordnen, so dass die Verschiebung der Schliessklappe (4) in ihre Schliessstellung automatisch die Verschiebung des Bodens (5a) der Rutsche (5) in seine eingezogene Stellung steuert und, dass die Verschiebung der Schliessklappe (4) in ihre Öffnungsstellung automatisch die Verschiebung des Bodens (5a) der Rutsche (5) in seine ausgefahrene Verteilungstellung steuert.

6. Maschine nach Anspruch 5, **dadurch gekennzeichnet, dass** der Betätigungs- und Antriebsmechanismus (7) Haltemittel (7g) umfasst, die es gestatten, in der Öffnungsstellung der Klappe (4b), den Boden (5a) der Rutsche (5) in seiner ausgefahrenen Stellung zu halten und derart konfiguriert ist, dass die Verschiebung der Klappe (4b) in ihre Schliessstellung automatisch die Betätigung der Verschiebung des Bodens (5a) von seiner ausgefahrenen Verteilungsstellung in seine eingezogene Stellung steuert und, dass die Verschiebung der Klappe (4b) in ihre Öffnungsstellung automatisch die Betätigung der Verschiebung des Bodens (5a) von seiner eingezogenen Stellung in seine ausgefahrene Verteilungsstellung steuert, in welcher er dank den Haltemittel (7g) gehalten wird.

7. Maschine nach Anspruch 6, **dadurch gekennzeichnet, dass** der Betätigungs- und Antriebsmechanismus (7) ein Satz mindestens einer Stange (7a, 7b, 7c) umfasst, die mit dem Boden (5a) der Rutsche (5) und mit einer festen Fläche (5b) der Rutsche (5) verbunden ist, wobei ein Betätigungsmittel (7d, 7e) die Betätigung des Satzes mindestens einer Stange (7a, 7b, 7c) durch mechanischen Kontakt zwischen der Klappe (4b) und dem Satz mindestens einer Stange (7a, 7b, 7c) während der Verschiebung der Klappe (4b) gestattet und wobei ein Verbindungsmittel (7f) die Verbindung zwischen letzterem und dem Boden (5a) der Rutsche (5) gewährleistet, so dass die Betätigung des Satzes mindestens einer Stange (7a, 7b, 7c) die Verschiebung des Bodens (5a) bewirkt.

8. Maschine nach Anspruch 7, **dadurch gekennzeichnet, dass** das Betätigungsmittel (7d, 7e) ein Betätigungsfinger (7d) umfasst, der an dem Satz mindestens einer Stange (7a) befestigt ist, und eine Betätigungslasche (7e), die an der Klappe (4b) befestigt ist, um während der Verschiebung der Klappe (4b) in ihre Schliessstellung mit dem Betätigungsfinger (7d) in Kontakt zu kommen, um den mechanischen Kontakt zu gewährleisten, der die Betätigung des Satzes mindestens einer Stange (7a, 7b, 7c) gestattet.

9. Maschine nach irgend einem der Ansprüche 6 bis 8, **dadurch gekennzeichnet, dass** die Haltemittel (7g) aus einem Rückstellmittel (7g), wie eine Rückstellfeder bestehen, das dazu geeignet ist, eine Rückstellkraft auf den Satz mindestens einer Stange (7a, 7b, 7c) auszuüben und deshalb auf den Boden (5a) der Rutsche (5) zu seiner ausgefahrenen Stellung, indem es ihn in letzerer in Öffnungsstellung der Klappe (4b) hält.

10. Maschine nach irgend einem der Ansprüche 1 bis 4, **dadurch gekennzeichnet, dass** das Bewegungssystem des Bodens (5a) der Rutsche (5) unabhängig von der Klappe (4b) der Klappe (4) ist und das eigene Bewegungssystem des Bodens (5a) bildet.

11. Maschine nach Anspruch 10, **dadurch gekennzeichnet, dass** das Verschiebungssystem des Bodens (5a) der Rutsche (5) mindestens ein Betätigungselement, wie ein Hydraulikzylinder umfasst, das dazu geeignet ist, die Verschiebung des Bodens (5a) bei seinem Einfahren oder Ausfahren, gegebenenfalls um die Drehachse (6a), zu betätigen.

12. Maschine nach irgend einem der Ansprüche 1 bis 11, **dadurch gekennzeichnet, dass** der Boden (5a) der Rutsche (5) zwei Wände (50a, 51a) umfasst, die zueinander geneigt und aneinander grenzend sind, nämlich eine hintere Wand (51a), die parallel zum Boden (1a) des Tanks (1) verläuft und eine vordere Wand (50a), die bezüglich der hinteren Wand (51a) nach unten geneigt ist, wobei die vordere Wand (50a) mit der Auswurfkante (50a) endet, oder diese bildet.

13. Maschine nach irgend einem der Ansprüche 1 bis 12, **dadurch gekennzeichnet, dass** die Führungsmittel (8a, 8b) eine Führungsgleitkufe (8a) umfassen, die fest mit dem Boden (5a) der Rutsche (5) verbunden ist und eine Führungstütze (8b), die fest mit einer festen Fläche der Rutsche (5) verbunden ist und auf welcher Führungstütze (8b) die Führungsgleitkufe (8a), die dazu geignet ist sich auf oder entlang letzterer, vorzugsweise durch gleiten, zu bewegen, bei der Verschiebung des Bodens (5a) der Rutsche (5), sich abstützt oder aufliegt.

14. Maschine nach irgend einem der Ansprüche 1 bis 13, **dadurch gekennzeichnet, dass** sie darüber hinaus ein Abstreifmittel (9) aufweist, das sich über dem Boden (5a) der Rutsche (5) erstreckt, in der unmittelbaren Nähe oder in Kontakt mit dem Boden (5a), um das Abstreifen der restlischen Mischung am Boden (5a), während der Verschiebung letzterem von seiner ausgefahrenen Verteilungsstellung in seine eingezogene Stellung, zu gestatten.

## Claims

1. Machine for mixing a product or products, more specifically a product or products used for feeding animals, and the distribution of the mixture of the said product or products, the said machine comprising a tank (1) carried by a rolling chassis (2) and comprising a floor (1a) and at least one side wall (1b) surmounting the said floor (1a), delimiting with the latter an inner product receiving and mixing space (1c), a mixing device (3) mounted in the said receiving space for making the mixture, at least one hatch (4) located in the side wall (1b) and comprising an aperture (4a) through which the mixture can be ejected outside the tank (1) and at least one flap (4b) adapted and intended to be controlled to be shifted between an open position and a closed position of the aperture (4a), at least one chute (5) associated with the or each hatch (4) and comprising a bottom (5a) forming a boom ending in a discharge edge (50a) allowing - during distribution - the ejection and distribution of the mixture at a distance remote from the aperture (4a), a travel system (6, 7, 8a, 8b) comprising an articulation (6), a pivot axis (6a) of the articulation (6), an actuating and driving mechanism (7) making it possible to actuate and drive the movement of the bottom (5a) of the chute (5) around the said pivot axis (6a) and guide means (8a, 8b) for the said movement of the bottom (5a), the said articulation (6) being a pivot articulation with a substantially vertical pivot axis (6a), the said machine being **characterized in that** the bottom (5a) of the chute (5) is made movable by means of the said travel system (6, 7, 8a, 8b) between a retracted position, when the flap (4b) is in the closed state, preferably at least partly under the tank (1) and more specifically under the floor (1a) of the latter, and a deployed distribution position, when the flap (4b) is in the open state.

2. Machine, according to claim 1, **characterized in that** the articulation (6) extends under the floor (1a) of the tank (1) and in the vicinity of the aperture (4a).

3. Machine, according to any one of claims 1 to 2, **characterized in that** the articulation (6) is laterally offset with respect to the aperture (4a).

4. Machine, according to any one of claims 1 to 3, **characterized in that** the chute (5) comprises side walls (5b, 5c) delimiting with the bottom (5a) of the said chute (5) the inner space of the latter and **in that** the guide means (8a, 8b) comprise a guide arranged on the inner face (50c) of one of the side walls (5c), the said guide forming a connection with the bottom (5a) to allow its guidance to pivot around the pivot axis (6a).

5. Machine, according to any one of claims 1 to 4, **characterized in that** the actuating and driving mechanism (7) is configured to enslave the movement of the bottom (5a) of the chute (5) to that of the flap (4b) so that the movement of the closing flap (4) into its closed position automatically controls the movement of the bottom (5a) of the chute (5) in its retracted position and that the movement of the closing flap (4) into its open position automatically controls the movement of the bottom (5a) of the chute (5) into its deployed distribution position.

6. Machine, according to claim 5, **characterized in that** the actuating and driving mechanism (7) comprises holding means (7g) making it possible to hold, in the open position of the flap (4b), the bottom (5a) of the chute (5) in the deployed position and is configured in such a way that the movement of the flap (4b) into its closed position automatically controls the actuation of the movement of the bottom (5a) from its deployed distribution position to its retracted position and that the displacement of the flap (4b) in its open position automatically controls the actuation of the displacement of the bottom (5a) from its retracted position to its deployed distribution position in which it is held by means of the said holding means (7g).

7. Machine, according to claim 6, **characterized in that** the actuating and driving mechanism (7) comprises a set of at least one connecting rod (7a, 7b, 7c), connected to the bottom (5a) of the chute (5) and to a fixed surface (5b) of the chute (5), an actuation means (7d, 7e) allowing the actuation of the said set of at least one connecting rod (7a, 7b, 7c) by mechanical contact between the flap (4b) and the said set of at least one connecting rod (7a, 7b, 7c) during the displacement of the flap (4b) and a connection means (7f) ensuring the connection between the latter and the bottom (5a) of the chute (5) so that the actuation of the said set of at least one connecting rod (7a, 7b, 7c) causes the displacement of the bottom (5a).

8. Machine, according to claim 7, **characterized in that** the actuation means (7d, 7e) comprises an actuator finger (7d) fixed to the set of at least one connecting rod (7a) and an actuator bracket (7e) fixed to the flap (4b) so as to be able to come into contact with the said actuator finger (7d) during the movement of the flap (4b) towards its closed position to achieve the mechanical contact allowing the actuation of the said set of at least one connecting rod (7a, 7b, 7c).

9. Machine, according to any one of claims 6 to 8, **characterized in that** the holding means (7g) consist of a return means (7g), such as a return spring, adapted to exert a return force on the set of at least one connecting rod (7a, 7b, 7c) and therefore on the bottom (5a) of the chute (5) towards its deployed position, holding it in the latter in the open position of the flap (4b).

10. Machine, according to any one of claims 1 to 4, **characterized in that** the travel system for the bottom (5a) of the chute (5) is independent of the flap (4b) of the hatch (4) and constitutes the own travel system for the said bottom (5a).

11. Machine, according to claim 10, **characterized in that** the travel system for the bottom (5a) of the chute (5) comprises at least one actuator such as a hydraulic cylinder able to actuate the displacement of the said bottom (5a) during its retraction or deployment, if applicable around the pivot axis (6a).

12. Machine, according to any of claims 1 to 11, **characterized in that** the bottom (5a) of the chute (5) comprises two contiguous walls (50a, 51a) inclined with respect to one other, namely a rear wall (51a) parallel to the floor (1a) of the tank (1) and a front wall (50a) inclined downwards with respect to the rear wall (51a), the said front wall (50a) terminating in or forming the discharge edge (50a).

13. Machine, according to any of the claims 1 to 12, **characterized in that** the guide means (8a, 8b) comprise a guide skid (8a) rigidly fastened to the bottom (5a) of the chute (5) and a guide support (8b) rigidly fastened to a fixed surface of the chute (5) and on which guide support (8b) comes to bear or rest the said guide skid (8a) which is adapted for moving, preferably by sliding, on or along the latter, during the displacement of the bottom (5a) of the chute (5).

14. Machine, according to any of the claims 1 to 13, **characterized in that** it furthermore comprises a scraper means (9) which extends above the bottom (5a) of the chute (5) in the immediate vicinity of or in contact with the said bottom (5a) so as to allow scraping of the mixture remaining on the said bottom (5a) during the displacement of the latter from its deployed distribution position to its retracted position.
